# EUROPÄISCHE PATENTSCHRIFT

(11) **EP 2 918 795 B1**
(45) Veröffentlichungstag und Bekanntmachung des Hinweises auf die Patenterteilung: **03.05.2017**
(21) Anmeldenummer: 14159191.7
(22) Anmeldetag: 12.03.2014
(51) Int. Cl.: F01K 13/02, F01K 25/08, F22B 33/02, G05B 13/00, G05B 23/02, G06Q 10/06

(54) **Regelung für ORC Stack-Systeme**
Control for stacked ORC systems
Régulation pour systèmes de pile ORC

(43) Veröffentlichungstag der Anmeldung: 16.09.2015
(73) Patentinhaber: Orcan Energy AG, 81379 München (DE)
(72) Erfinder: Lintl, Markus, 80797 München (DE); Springer, Jens-Patrick, 81371 München (DE); Schuster, Andreas, 86874 Tussenhausen (DE)
(74) Vertreter: Grünecker Patent- und Rechtsanwälte PartG mbB

(56) Entgegenhaltungen:
- EP-A1- 0 372 864
- DE-A1- 19 748 315
- US-A- 5 857 338
- US-A- 5 860 279

## Beschreibung

### Gebiet der Erfindung

Die Erfindung betrifft ein Verfahren zu Regelung eines ORC-Systems mit einer Gesamtanzahl nₜₒₜ von einzeln betreibbaren ORC-Modulen.

### Stand der Technik

Ein System zur Gewinnung von elektrischer Energie aus Wärmeenergie mit dem Organic Rankine Cycle als thermodynamischen Kreisprozess (ORC System), besteht aus den folgenden Hauptkomponenten: Eine Speisepumpe, die flüssiges organisches Arbeitsmedium unter Druckerhöhung zu einem Verdampfer fördert, dem Verdampfer selbst, in dem das Arbeitsmedium unter Zuführung von Wärme verdampft und optional zusätzlich überhitzt wird, eine Expansionsmaschine, in welcher der unter hohem Druck stehende Dampf entspannt wird und dabei mechanische Energie erzeugt, welche über einen Generator zu elektrischer Energie gewandelt wird, und einem Kondensator, in dem der Niederdruckdampf aus der Expansionsmaschine verflüssigt wird. Aus dem Kondensator gelangt das flüssige Arbeitsmedium über einen optionalen Vorratsbehälter (Speisebehälter) und eine Saugleitung wieder zur Speisepumpe des Systems, wodurch der thermodynamische Kreislauf geschlossen ist.

Ein funktionsfähiges ORC-System in kompakter Bauweise wird auch als ORC-Modul bezeichnet. Um größere Abwärmemengen außerhalb des Auslegungsbereichs eines ORC-Moduls bedienen zu können, werden mehrere Module zusammengeschaltet. Diese Anordnung wird im Folgenden als ORC-Stack bezeichnet. Dabei werden mehrere ORC-Module parallel betrieben, wobei deren Anzahl je nach Abwärmeleistung ausgewählt wird.

Ein ORC-Modul kann ohne ständiges Bedienpersonal betrieben werden. Lediglich einige Komponenten erfordern von Zeit zu Zeit eine Wartung. Die Wartungsarten können untergliedert werden in kalenderorientierte Wartungsarten (z.B. Dichtigkeitsprüfung, mindestens einmal pro Jahr), betriebsstundenorientierte Wartungsarten (z.B. Lüfter am Frequenzumrichter, da dieser läuft, sobald das Modul in Betrieb ist, volllastbetriebsstundenorientierte Wartungsarten (z.B. Lüfter am Kondensator, dessen Betrieb lastabhängig erfolgt), zustandsorientierte Wartungsarten (z.B. verschmutzte Wärmeübertrager wie etwa Abgas-Wärmeübertrager oder Kondensator).

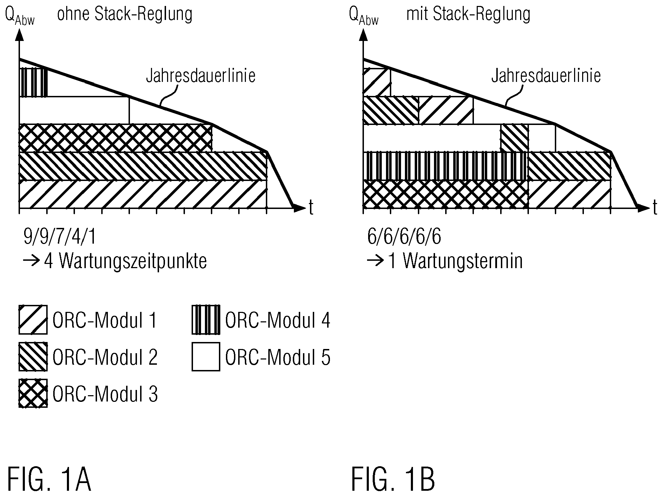

Bei einem unkoordinierten Betrieb der einzelnen ORC-Module eines ORC-Stacks kommt es zu verschiedenen Wartungsintervallen der einzelnen ORC-Module (siehe Fig. 1A). Das ist nachteilig, da die Wartung mit einer Betriebsunterbrechung verbunden ist und jeweils Wartungspersonal anreisen muss. Ebenso ist es nachteilig, wenn verschiedene Wartungen innerhalb eines ORC-Moduls unkoordiniert anfallen.

Ein Verfahren zu Regelung eines ORC-Stacks mit einer Gesamtanzahl von einzeln betreibbaren ORC-Modulen offenbart das Dokument EP0372864A1.

### Beschreibung der Erfindung

Aufgabe der Erfindung ist es, die oben beschriebenen Nachteile zumindest teilweise zu überwinden.

Diese Aufgabe wird gelöst durch ein Verfahren nach Anspruch 1.

Erfindungsgemäß wird ein Verfahren zu Regelung eines ORC-Stacks mit einer Gesamtanzahl nₜₒₜ von einzeln betreibbaren ORC-Modulen bereitgestellt, wobei das Verfahren die folgenden Schritte umfasst: Bestimmen einer jeweiligen Restlaufzeit bis zu einem nächsten Wartungszeitpunkt für jedes betreibbare ORC-Modul; Bestimmen einer Soll-Anzahl nₛₒₗₗ von zu betreibenden ORC-Modulen; Vergleichen der Soll-Anzahl nₛₒₗₗ mit einer Ist-Anzahl nᵢₛₜ von aktuell betriebenen ORC-Modulen; falls nₛₒₗₗ > nᵢₛₜ, Zuschalten einer Anzahl nₛₒₗₗ - nᵢₛₜ von ORC Modulen entsprechend der Differenz zwischen der Soll-Anzahl und der Ist-Anzahl, wobei die ORC-Module mit den längsten Restlaufzeiten der aktuell nicht betriebenen ORC-Module zugeschaltet werden; und/oder falls nₛₒₗₗ < nᵢₛₜ, Abschalten einer Anzahl nᵢₛₜ - nₛₒₗₗ von ORC Modulen entsprechend der Differenz zwischen der Ist-Anzahl und der Soll-Anzahl, wobei die ORC-Module mit den kürzesten Restlaufzeiten der aktuell betriebenen ORC-Module abgeschalteten werden; und/oder falls nₛₒₗₗ = nᵢₛₜ, Zuschalten des ORC-Moduls mit der längsten Restlaufzeit Δt₁ der aktuell nicht betriebenen ORC-Module und Abschalten des ORC-Moduls mit der kürzesten Restlaufzeit Δt₂ der aktuell betriebenen ORC-Module, wenn Δt₁ > Δt₂.

Mit dem erfindungsgemäßen Verfahren werden die Betriebszeiten der einzelnen ORC-Module untereinander homogenisiert. Falls beispielsweise ein Modul hinzugeschaltet werden muss, dann wird jenes Modul aus der Gruppe der aktuell nicht betriebenen Module hinzugeschaltet, welches die längste Restlaufzeit bis zur nächsten Wartung aufweist. Wenn andererseits ein Modul abgeschaltet werden muss, dann wird jenes Modul aus der Gruppe der aktuell betriebenen Module abgeschaltet, welches die kürzeste Restlaufzeit bis zur nächsten Wartung aufweist. Falls auf Grund der Anzahl kein Modul zu- oder abgeschaltet werden muss, erfolgt zusätzlich oder optional dennoch eine Prüfung der Restlaufzeiten bis zur nächsten Wartung. Wenn festgestellt wird, dass ein betriebenes Modul eine kürze Restlaufzeit als ein nicht-betriebenes Modul aufweist, wird Ersteres abgeschaltet und Letzteres zugeschaltet. Somit werden in jedem Fall bisher weniger betriebene Module vermehrt eingesetzt und bisher mehr eingesetzte Module geschont. Auf diese Weise wird erreicht, dass Wartungszeitpunkte zusammenfallen oder zumindest nahezu zusammenfallen, so dass die erforderlichen Wartungen an den ORC-Modulen an einem Wartungstermin durchgeführt werden können. Ein Zu- und Abschalten erfolgt natürlich nur in einer ganzzahligen Anzahl von ORC-Modulen. Die Homogenisierung kann optional auch für die einzelnen ORC-Module erfolgen, um verschieden Wartungen zeitlich zusammenzuführen.

Das erfindungsgemäße Verfahren kann dahingehend weitergebildet werden, dass ein erneutes Durchführen der Schritte des erfindungsgemäßen Verfahrens nach Ablauf einer vorgegeben Aktualisierungszeitdauer erfolgt. Dies hat den Vorteil, dass bei einem längeren Betrieb des ORC-Stacks bei konstanten Bedingungen, beispielsweise bei konstantem Wärmestrom von einer Wärmequelle, aktualisierte Restlaufzeiten bestimmt werden auf deren Grundlage die jeweils verwendeten Module ausgewählt werden.

Eine andere Weiterbildung besteht darin, dass das Bestimmen der Restlaufzeit bis zur nächsten Wartung für jedes betreibbare ORC-Modul ein Bestimmen der kürzesten Restlaufzeit aus einer Mehrzahl von Restlaufzeiten bis zu Wartungszeitpunkten für verschiedenartige Wartungen für das jeweilige ORC-Modul umfassen kann. Für jedes Modul sind in der Regel verschiedenartige Wartungen, z.B. für verschiedene Komponenten, durchzuführen. Gemäß dieser Weiterbildung erfolgt die Entscheidung über Zu- oder Abschaltung von Modulen auf Grund der kürzesten aller Restlaufzeiten für das jeweilige Modul.

Alternativ können die jeweiligen Wartungszeitpunkte für die betreibbaren ORC-Module Wartungszeitpunkte für gleichartige Wartungen sein. Auf diese Weise wird eine Homogenisierung der Restlaufzeiten für eine bestimme Art der Wartung erreicht. Somit können Servicearbeiten, die beispielsweise einen Spezialisten zu deren Ausführung erfordern, auf einen Wartungstermin gelegt werden.

Gemäß einer anderen Weiterbildung kann das Bestimmen der Restlaufzeit bzw. Restlaufzeiten mittels vorbestimmten oder selbstlernenden Funktionen/Algorithmen erfolgen. Solche beispielsweise in einer Steuereinheit abgespeicherten Funktionen oder Algorithmen können empirisch bestimmt sein oder sie sind fest vorgegeben, wie im Falle von gesetzlich vorgeschriebenen Prüfintervallen.

Das Verfahren kann weiterhin den folgenden Schritt umfassen: Bestimmen einer einen Wärmestrom in den ORC-Stack bestimmenden Größe, insbesondere den Wärmestrom selbst oder den Massenstrom eines wärmetransportierenden Fluids; wobei das Bestimmen der Soll-Anzahl von zu betreibenden ORC-Modulen in Anhängigkeit von der den Wärmestrom bestimmenden Größe erfolgt. Der Wärmestrom von einer Wärmequelle kann gemessen oder anderweitig ermittelt (z.B. aus anderen Messgrößen berechnet) werden, und daraufhin kann die Anzahl der erforderlichen ORC-Module zur Aufnahme des Wärmestroms und zur Erzeugung von elektrischer Energie ermittelt werden.

Im Falle, dass aufgrund des Wärmestroms für eine exakte Ausnutzung der Wärme eine nicht-ganzzahlige Anzahl von ORC-Modulen zu- oder abgeschaltet werden müsste, kann die Bestimmung der Soll-Anzahl ein Auf- oder Abrunden zur nächst-höheren oder nächst-niedrigeren ganzzahligen Anzahl beinhalten. Dies kann beispielsweise davon abhängig gemacht werden, ob der Wärmestrom von der Wärmequelle abgenommen werden muss (z.B. im Fall einer Kühlung der Wärmequelle durch Abnahme erzeugter Wärme mit dem ORC-Stack) oder nicht (wenn z.B. erzeugte Wärme anderweitig, insbesondere durch Abgabe an die Umgebungsluft, abgeführt werden kann).

Gemäß einer Weiterbildung umfasst das vorstehend genannte Verfahren den weiteren Schritt: erneutes Bestimmen des Eingangswärmestroms, insbesondere nach Ablauf einer vorgegebenen Wartezeit nach dem letzten Bestimmen des Eingangswärmestroms, und falls eine Änderung des Eingangswärmestroms, insbesondere über einen Toleranzbereich für die Änderung hinaus, festgestellt wird, erneutes Ausführen des Verfahrens. Auf diese Weise werden bei einer Änderung des Wärmestroms von der Wärmequelle alle Schritte des Verfahrens wiederholt durchgeführt, so dass die Anzahl der Module und ebenso welche Module betrieben werden, neu bestimmt wird.

Das Bestimmen der Soll-Anzahl von zu betreibenden ORC-Modulen kann weiterhin ein Bestimmen eines jeweiligen zuzuführenden Wärmestroms innerhalb eines Betriebsbereichs für jedes ORC-Modul hinsichtlich des zugeführten Wärmestroms umfassen. Jedes Modul muss nicht notwendigerweise bei seiner Nennleistung betrieben werden sondern es hat einen Betriebsbereich für den eingehenden Wärmestrom.

Dabei kann der Betriebsbereich für jedes ORC-Modul durch einen Wärmestrombereich in einer Leistungskennlinie oder einer Wirkungsgradkennlinie definiert ist, die den Zusammenhang zwischen elektrischer Leistung bzw. elektrischem Wirkungsgrad in Abhängigkeit des zugeführten Wärmestroms angibt, insbesondere einen Wärmestrombereich der durch einen minimalen und einen maximalen Wärmestrom definiert ist.

Insbesondere kann für ein oder mehrere der zu betreibenden ORC-Module der jeweils zuzuführende Wärmestrom so bestimmt werden, dass jeweils eine möglichst große elektrische Leitung oder ein möglichst großer elektrischer Wirkungsgrad resultiert. Somit ergibt sich eine optimale Umsetzung der eingebrachten Wärme in elektrische Energie. Dabei kann das Bestimmen des zuzuführenden Wärmestroms für jedes ORC-Modul ein Maximieren eines elektrischen Gesamtwirkungsgrads für den ORC-Stack umfassen.

Nach einer Weiterbildung kann das Bestimmen des zuzuführenden Wärmestroms innerhalb des Betriebsbereichs unter Berücksichtigung daraus resultierender Änderungen der Restlaufzeiten erfolgen. Daher gibt es für die Angleichung der Wartungszeitpunkte weitere Einstellmöglichkeiten.

Dabei kann der zuzuführende Wärmestrom so bestimmt werden, dass eine Verschiebung eines Wartungszeitpunkts um eine erwünschte Zeitdauer resultiert, wodurch insbesondere eine Verkürzung oder Verlängerung der entsprechenden Restlaufzeit resultiert. So kann beispielsweise ein Modul mit sehr kurzer Restlaufzeit bis zur nächsten Wartung des Kondensatorlüfters trotz Betrieb geschont werden, indem der diesem Modul zugeführte Wärmestrom am unteren Ende des Betriebsbereichs gewählt wird.

Die Erfindung stellt auch ein Computerprogrammprodukt zur Verfügung, welches Programmteile umfasst, die zur Durchführung des erfindungsgemäßen Verfahrens oder einer der Weiterbildungen geeignet sind, wenn sie in einem Computer geladen sind.

Die Erfindung stellt weiterhin einen ORC-Stack mit einer Gesamtanzahl nₜₒₜ von einzeln betreibbaren ORC-Modulen zur Verfügung, wobei der ORC-Stack eine Steuereinheit zur Durchführung des erfindungsgemäßen Verfahrens oder einer der Weiterbildungen umfasst.

Die genannten Weiterbildungen können einzeln eingesetzt oder wie beansprucht geeignet miteinander kombiniert werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Zeichnungen

- Figur 1A,B: zeigen Verteilungen von Betriebszeiten von ORC-Modulen in einem ORC-Stack.
- Figur 2: zeigt ein Ablaufdiagram für eine Steuerung gemäß einer Ausführungsform der vorliegenden Erfindung.
- Figuren 3A,B: zeigen den Wirkungsgradverlauf in Abhängigkeit vom zugeführten Wärmestrom.
- Figur 4: zeigt den zeitlichen Verlauf von Wartungsparametern

### Ausführungsformen

Je nach verfügbarer (Ab-)Wärmeleistung, bedienen in Fig.1A ORC-Modul 1 und 2 die Grundlast und laufen über das angegebene Zeitintervall vollständig durch. Dagegen werden die ORC-Module 3-5 nur teilweise benötigt werden. Dadurch ergibt sich eine stark heterogene Verteilung der Betriebszeiten entsprechend der vorgegebenen Wartungsintervalle und Wartungszeitpunkte. Ziel ist aber eine Homogenisierung der Wartungsintervalle bzw. Wartungszeitpunkte wie in Fig. 1B dargestellt ist. Wie diese Skizze andeutet, müssen dafür die einzelnen ORC-Module bei unterschiedlicher Anzahl laufender ORC-Module koordiniert betrieben werden. Die grundlegende Fragestellung ist demnach, wie eine Prozessregelung die Wartungsintervalle synchronisieren kann, in dem sie die ORC-Module so ein- oder ausschaltet, dass an einem Wartungstermin maximal viele ORC-Module gewartet werden können. Weiterhin soll die Prozessregelung durch die Synchronisation der Wartungsintervalle dafür sorgen, dass bei einem Wartungseinsatz keine Komponenten vor Erreichen ihrer Lebensdauer getauscht werden, was bisher mit einem Wegfall eines ansonsten notwendigen weiteren Wartungseinsatzes begründet wurde.

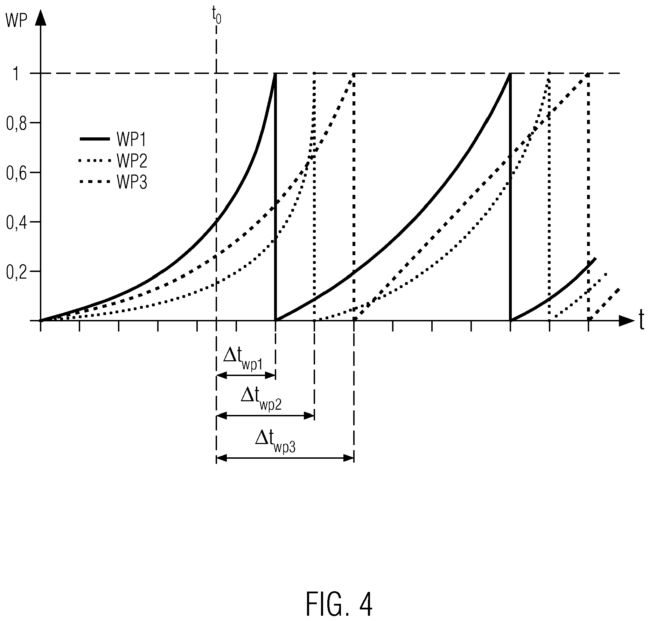

Zur Erfassung der Restlaufzeiten für verschiedene Wartungsarten wird in dieser Ausführungsform ein jeweiliger sogenannter Wartungsparameter definiert, der einen stetig wachsenden Wert im Zusammenhang mit der Restlaufzeit bis zur nächsten Wartung ergibt. Dies ist in Fig. 4 beispielhaft für drei Wartungsparameter WP1, WP2 und WP3 in Abhängigkeit von der Zeit t dargestellt. Der Zeitpunkt t₀ ist ein aktueller Betrachtungszeitpunkt bei dem eine Entscheidung über zu- oder abzuschaltende ORC-Module gefällt wird. Dabei ist jeder Wartungsparameter mit einer entsprechenden Restlaufzeit Δt_{WP1}, Δt_{WP2} bzw. Δt_{WP3} bis zur Wartung verknüpft. Die Ermittlung der Restlaufzeit kann z.B. aus dem bisherigen Verlauf des Wartungsparameters extrapoliert oder über eine Selbstlernlogik bestimmt werden. Alternativ kann auch umgekehrt aus der Restlaufzeit auf den Wartungsparameter geschlossen werden. Beispielsweise existiert bei einer jährlich feststehenden Wartung ein fester linearer Zusammenhang zwischen WP und Δt_{WP}. Die Wartungsarten in einem ORC-Modul können wie folgt in Wartungsparameter (WP) untergliedert werden:
a) Kalenderorientierte WP - z.B. Dichtigkeitsprüfung (mindestens einmal pro Jahr)
b) Betriebsstundenorientierte WP - z.B. Lüfter am Frequenzumrichter (dieser läuft, sobald ORC-Modul in Betrieb ist)
c) Volllastbetriebsstundenorientierte WP - z.B. Lüfter am Kondensator (dieser läuft lastabhängig)
d) Zustandsorientierte WP - z.B. verschmutzte Wärmeübertrager (Abgas-Wärmeübertrager, Kondensator)

Die Wartungsparameter basieren auf hinterlegten oder selbstlernenden Funktionen/Algorithmen. Eine Wartung hat zu erfolgen, wenn der Wartungsparameter größer oder gleich 1 ist, wobei im Idealfall eine Wartung genau bei WP=1 erfolgen sollte. Ein geringfügiges Überschreiten des Wartungsparameters wird in der Regel möglich sein, jedoch arbeitet die Anlage dann außerhalb der spezifizierten Werte. Ein Wartungsparameter stellt einen Zusammenhang zwischen der Restlaufzeit bis zur fälligen Wartung her, wobei im Falle einer gerade erfolgten Wartung WP=0 ist. Der Wartungsparameter bildet also die Restlaufzeit auf das Intervall [0; 1] ab, wobei ein Überschreiten des Wartungszeitpunkts mit Werten WP > 1 verbunden ist. Dabei ist etwa bei einem rein auf Betriebszeit basierten Wartungsparameter eine Aufsummierung der Laufzeit seit der letzen Wartung durchzuführen. Bei einer von der Betriebszeit unabhängigen Wartung (z.B. jährlich) nimmt der Wartungsparameter von der letzen Wartung bis zur nächsten Wartung linear von 0 bis 1 zu.

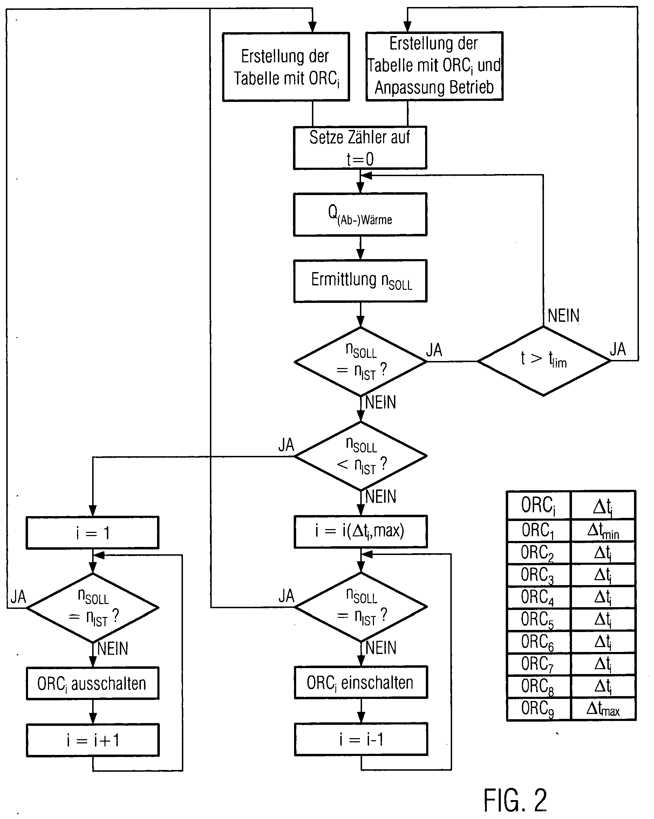

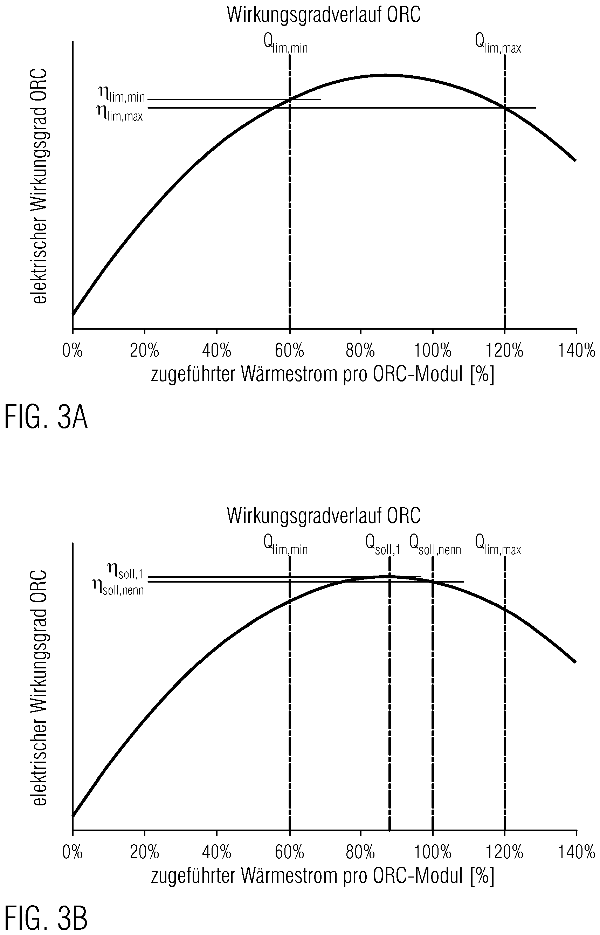

Abbildung 2 erläutert den Ablauf der Entscheidungsfindung, welche ORC-Module in Betrieb zu setzen bzw. auszuschalten sind.
1. Schritt: Reihenfolge der als nächstes zu wartenden ORC-Module ermitteln. In diesem Schritt wird eine Tabelle mit allen verfügbaren, d.h. betriebsbereiten oder sich in Betrieb befindlichen ORC-Module ORCᵢ erstellt, geordnet nach dessen kleinsten Δtᵢ. ORC-Module, welche nicht betriebsbereit sind, z.B. aufgrund einer Störung oder aufgrund von erfolgenden Wartungsarbeiten, werden in der Tabelle nicht berücksichtigt. Ein Δtᵢ bezeichnet das Zeitintervall vom aktuellen Zeitpunkt bis zur nächsten durchzuführenden Wartung, was durch das Erreichen des Werts 1 für den jeweiligen Wartungsparameter WP mit dem größten Wert bestimmt wird. Dieser Wert wird für jeden WP eines jeden ORC-Moduls ermittelt (durch Extrapolieren der Graphen der einzelnen WP basierend z.B. auf der Verlaufsänderung in der Vergangenheit oder auch sonstiger Werte wie Jahreszeit, Schwefelgehalt im Biogas / Abgas etc.). Es können bei einem Stack aus ORC-Modulen unterschiedliche Wartungsparameter zur Wartung führen, so kann z.B. bei einem ORC-Modul der Wartungsparameter der Speisepumpe erreicht sein, bei einem anderen hingegen der Wartungsparameter eines Lüfters o.ä. Danach wird der WP mit dem größten Wert pro ORC-Modul ermittelt. Daraus leiten sich die Restlaufzeiten Δtᵢ ab, anhand deren dann eine Tabelle sortiert nach wachsenden Restlaufzeiten erstellt wird. Der Wartungsparameter kann wie oben beschrieben aufgrund gesetzlicher Vorgaben in einem festen Zeitintervall liegen, kann von Betriebs- oder Vollastbetriebsstunden oder auch den Zustand der Komponente definiert werden. Nachdem die Tabelle aktualisiert wurde, wird die Laufvariable t = 0 gesetzt.
2. Schritt: Wärmestrom bestimmen. Hier wird der Wärmestrom *Q̇*_{(Ab)Wärme} als Eingangsparameter ermittelt, dies kann durch verschiedene Art und Weise ermittelt geschehen, z.B. durch direkte Messung mittels eines Wärmemengenzählers oder auch indirekt durch eine Bestimmung aus Parametern und Modellgleichungen der Komponenten des ORCs.
3. Schritt: Ermittlung nₛₒₗₗ. Anhand einer Kennlinie für das Teillastverhalten eines ORC-Moduls- siehe Linie in Abb. 3A - wird ein Bereich (Auslegungsbereich) abhängig von der zugeführten Wärme in einen einzelnen ORC-Module definiert (x-Achse, Q_{lim,min} bis Q_{lim,max}) in welchem das ORC-Modul betrieben werden soll. Das Teillastverhalten eines ORC-Moduls kann experimentell durch Abfahren verschiedener Leistungsgrößen ermittelt werden, kann aber bei ausreichender Kenntnis der Einzelkomponenten, des Arbeitsmediums sowie der Verschaltung auch theoretisch berechnet werden.

Die in Abb. 3A dargestellte beispielhafte Kurve ist eine angepasste Ausgleichsfunktion basierend auf Messwerten. Man erkennt, dass das Wirkungsgradmaximum bei etwas geringerer Wärmeleistung als Volllast (= 100 % Wärmeleistung, Nennleistung, Auslegungspunkt) auftritt. Dies ist darauf zurückzuführen, dass in Teillast spezifisch mehr Fläche für die Wärmeübertragung in Verdampfer und Kondensator zur Verfügung steht. Insbesondere beim Kondensator ergeben sich durch diese faktische Überdimensionierung eine effiziente Wärmeabfuhr mit geringem Hilfsenergiebedarf sowie ein geringerer Kondensationsdruck was zu einem besseren Brutto-Wirkungsgrad führt. Beides zusammen ist maßgeblich verantwortlich für den im Teillastbereich steigenden Wirkungsgrad. Das Sinken des Wirkungsgrads links vom Maximum ist begründet durch die Abnahme des Massenstroms sowie der Frischdampftemperatur, was sich in schlechteren Expansionsmaschinen- sowie schlechteren thermischen Wirkungsgraden bemerkbar macht.

Ebenso möglich ist ein Betrieb des ORCs in Überlast (bezogen auf den Auslegungspunkt) solange die Komponentenspezifikationen eingehalten werden (z.B. maximale Drehzahlen oder auch maximale elektrische Leistungen). Ein Überlastbetrieb führt zu einer steigenden Bruttoleistung, hat aber auch einen steigenden Eigenbedarf zur Folge, welcher ein Mehr der Bruttoleistung überkompensiert. Somit bildet sich ein Wirkungsgradmaximum aus. Die Abnahme des Wirkungsgrads bei Überlastbetrieb resultiert z.B. bei Verwendung eines Luftkondensators mit geregeltem Kondensatorlüfter maßgeblich aus dem überproportional stark steigenden Eigenstrombedarf des Kondensatorlüfters.

Die Festlegung des Auslegungsbereichs kann von mehreren Faktoren (z.B. Dynamik der Wärmequelle, Anzahl der ORC-Module pro Stack, auch Außentemperatur) abhängig sein. Für jeden Einsatzfall kann somit der Auslegungsbereich zuvor definiert oder durch einen Selbstlernalgorithmus ermittelt oder individuell einmalig oder auch laufend angepasst werden.

Die hier vorgestellte Regelung ermöglicht dadurch einen leistungsoptimierten Betrieb des ORC-Stacks, da alle Einzelsysteme in einem optimierten Einsatzpunkt betrieben werden können. Für einen gleichbleibenden gesamten Wärmeeintrag in den Stack (*Q̇*_{(Ab)Wärm}) zeigt Fig. 3B zwei unterschiedliche Betriebspunkte. Diese resultieren aus einer unterschiedlichen Anzahl an ORC-Modulen in Betrieb. Für dieses Beispiel gilt der Zusammenhang: n_{soll,1} > n_{soll,nenn}. Die ORC-Stack-Prozessregelung lässt beide Betriebsfälle zu, da in beiden Fällen jeweils gewährleistet wird, dass die ORC-Module mit einem Wirkungsgrad im Auslegungsbereich betrieben werden. Wie Fig. 3B zeigt, ermöglicht einen übergeordnete Stack-Regelung eine Optimierung der Leistung der Einzelsysteme aufgrund der Tatsache, dass im Teillastverhalten (90% = Soll,1) der Wirkungsgrad der Einzelsysteme besser ist als im Auslegungspunkt der einzelnen ORC-Module (100% = Soll,nenn).

Solange die Anzahl innerhalb der Grenzen des Auslegungsbereichs liegt ist wird dieser Wert von nₛₒₗₗ von der Prozessregelung erlaubt. Wie viele ORC-Module aber tatsächlich in Betrieb sind, kann darüber hinaus noch von weiteren Faktoren abhängen. Der Wirkungsgradvorteil durch ein oder mehrere zusätzlich in Betrieb genommene ORC-Module darf nicht durch zusätzlich auftretende Wartungskosten aufgehoben oder übertroffen werden, sei es durch einen Aufbrauchen von Laufzeit bis zur Erreichung eins betriebsstundenorientierten WP, eines Volllastbetriebsstundenorientierte WP, oder der weiteren Zunahme eines zustandsorientierten WP, was die Regelung hier sicher stellt.
4. Schritt: Anzahl der laufenden ORC-Module ermitteln. In diesem Schritt vergleicht die Regelung die Anzahl der benötigten ORC-Module (nₛₒₗₗ) zur optimalen Verstromung der verfügbaren Abwärmeleistung (*Q̇*(Ab)_{Wärme}) mit der Anzahl aktuell im Betrieb befindlichen ORC-Modul (nᵢₛₜ).

### 1. Fall: nᵢₛₜ = nₛₒₗₗ

Für den Fall, dass nᵢₛₜ = nₛₒₗₗ bleiben die laufenden ORC-Module in Betrieb. Wenn sich nach einer definierten Mindestlaufzeit tₗᵢₘ die Leistung nicht verändert hat, dann wird die Tabelle der Wartungsparameter auf deren Aktualität überprüft und entsprechend ORC-Module zu- oder abgeschaltet. Dadurch wird verhindert, dass einige ORC-Module zu schnell an die Wartungszeitpunkte kommen und somit nicht mehr zur Verfügung stehen. Müssen ORC-Module abgeschaltet werden, so wird zunächst das ORC-Modul mit dem geringsten Δtᵢ (Tabellenplatz 1) und ggf. weitere (gemäß Reihenfolge in der Tabelle) abgeschaltet. Falls ORC-Module hinzugeschaltet werden sollen, so sind die ORC-Module, welche nicht in Betrieb aber betriebsbereit sind mit den größten Δtᵢ einzuschalten.

### 2. Fall: nₛₒₗₗ < nᵢₛₜ

Wenn weniger ORC-Module in Betrieb sein sollen, als es aktuell sind, dann müssen ORC-Module ausgeschaltet werden. Dazu wird eine Laufvariable i=1 gesetzt. Wenn nun das Abbruchkriterium nᵢₛₜ = nₛₒₗₗ noch nicht gegeben ist, dann werden so lange ORC-Module beginnend mit dem größten Wartungsparameter, d.h. mit der geringsten Restlaufzeit bis zur Wartung, ausgeschaltet. Dies wird durch ein Erhöhen der Laufvariablen i um 1 erreicht.

### 3. Fall: nₛₒₗₗ > nᵢₛₜ

Wenn mehr ORC-Module in Betrieb sein sollen, als es aktuell sind, dann müssen ORC-Module eingeschaltet werden. Dazu wird eine Laufvariable i=i(Δtᵢ=max) gesetzt, d.h. das i verwendet, was dem ORC-Modul mit dem geringsten Wartungsparameter entspricht. Dieses i kann, muss aber nicht notwendigerweise der Anzahl der ORC-Module entsprechen. Solange nun das Abbruchkriterium nᵢₛₜ = nₛₒₗₗ noch nicht gegeben ist, dann werden so lange ORC-Module beginnend mit dem geringsten Wartungsparameter, d.h. mit der größten Restlaufzeit bis zur Wartung, eingeschaltet und die Laufvariable um 1 reduziert.

Die dargestellten Ausführungsformen sind lediglich beispielhaft und der vollständige Umfang der vorliegenden Erfindung wird durch die Ansprüche definiert.

## Patentansprüche

1. Verfahren zu Regelung eines ORC-Stacks mit einer Gesamtanzahl nₜₒₜ von einzeln betreibbaren ORC-Modulen, wobei das Verfahren durch die folgenden Schritte gekennzeichnet ist:
Bestimmen einer jeweiligen Restlaufzeit bis zu einem nächsten Wartungszeitpunkt für jedes betreibbare ORC-Modul;
Bestimmen einer Soll-Anzahl nₛₒₗₗ von zu betreibenden ORC-Modulen;
Vergleichen der Soll-Anzahl nₛₒₗₗ mit einer Ist-Anzahl nᵢₛₜ von aktuell betriebenen ORC-Modulen;
falls nₛₒₗₗ > nᵢₛₜ, Zuschalten einer Anzahl nₛₒₗₗ - nᵢₛₜ von ORC-Modulen entsprechend der Differenz zwischen der Soll-Anzahl und der Ist-Anzahl, wobei die ORC-Module mit den längsten Restlaufzeiten der aktuell nicht betriebenen ORC-Module zugeschalteten werden; und/oder
falls nₛₒₗₗ < nᵢₛₜ, Abschalten einer Anzahl nᵢₛₜ - nₛₒₗₗ von ORC-Modulen entsprechend der Differenz zwischen der Ist-Anzahl und der Soll-Anzahl, wobei die ORC-Module mit den kürzesten Restlaufzeiten der aktuell betriebenen ORC-Module abgeschalteten werden; und/oder
falls nₛₒₗₗ = nᵢₛₜ, Zuschalten des ORC-Moduls mit der längsten Restlaufzeit Δt₁ der aktuell nicht betriebenen ORC-Module und Abschalten des ORC-Moduls mit der kürzesten Restlaufzeit Δt₂ der aktuell betriebenen ORC-Module wenn Δt₁ > Δt₂.

2. Verfahren nach Anspruch 1 mit dem weiteren Schritt:
erneutes Durchführen der Schritte nach Anspruch 1 nach Ablauf einer vorgegeben Aktualisierungszeitdauer.

3. Verfahren nach Anspruch 1 oder 2, wobei das Bestimmen der Restlaufzeit bis zur nächsten Wartung für jedes betreibbare ORC-Modul ein Bestimmen der kürzesten Restlaufzeit aus einer Mehrzahl von Restlaufzeiten bis zu Wartungszeitpunkten für verschiedenartige Wartungen für das jeweilige ORC-Modul umfasst.

4. Verfahren nach Anspruch 1 oder 2, wobei die jeweiligen Wartungszeitpunkte für die betreibbaren ORC-Module Wartungszeitpunkte für gleichartige Wartungen sind.

5. Verfahren nach einem der vorhergehenden Ansprüche, wobei das Bestimmen der Restlaufzeit bzw. Restlaufzeiten mittels vorbestimmten oder selbstlernenden Funktionen/Algorithmen erfolgt.

6. Verfahren nach einem der vorhergehenden Ansprüche, weiterhin den folgenden Schritt umfassend:
Bestimmen einer einen Wärmestrom in den ORC-Stack bestimmenden Größe, insbesondere den Wärmestrom selbst oder den Massenstrom eines wärmetransportierenden Fluids;
wobei das Bestimmen der Soll-Anzahl von zu betreibenden ORC-Modulen in Anhängigkeit von der den Wärmestrom bestimmenden Größe erfolgt.

7. Verfahren nach Anspruch 6, mit dem weiteren Schritt:
erneutes Bestimmen des Eingangswärmestrom, insbesondere nach Ablauf einer vorgegebenen Wartezeit nach dem letzten Bestimmen des Eingangswärmestroms, und
falls eine Änderung des Eingangswärmestroms, insbesondere über einen Toleranzbereich für die Änderung hinaus, festgestellt wird, erneutes Ausführen des Verfahrens nach Anspruch 6 einschließlich aller Schritte in den jeweiligen abhängigen Ansprüchen.

8. Verfahren nach Anspruch 6 oder 7, wobei das Bestimmen der Soll-Anzahl von zu betreibenden ORC-Modulen weiterhin ein Bestimmen eines jeweiligen zuzuführenden Wärmestroms innerhalb eines Betriebsbereichs für jedes ORC-Modul hinsichtlich des zugeführten Wärmestroms umfasst.

9. Verfahren nach Anspruch 8, wobei der Betriebsbereich für jedes ORC-Modul durch einen Wärmestrombereich in einer Leistungskennlinie oder einer Wirkungsgradkennlinie definiert ist, die den Zusammenhang zwischen elektrischer Leistung bzw. elektrischem Wirkungsgrad in Abhängigkeit des zugeführten Wärmestroms angibt, insbesondere einen Wärmestrombereich der durch einen minimalen und einen maximalen Wärmestrom definiert ist.

10. Verfahren nach Anspruch 9, wobei für ein oder mehrere der zu betreibenden ORC-Module der jeweils zuzuführende Wärmestrom so bestimmt wird, dass jeweils eine möglichst große elektrische Leitung oder ein möglichst großer elektrischer Wirkungsgrad resultiert.

11. Verfahren nach Anspruch 9 oder 10, wobei das Bestimmen des zuzuführenden Wärmestroms für jedes ORC-Modul ein Maximieren eines elektrischen Gesamtwirkungsgrads für den ORC-Stack umfasst.

12. Verfahren nach einem der Ansprüche 8 bis 11, wobei das Bestimmen des zuzuführenden Wärmestroms innerhalb des Betriebsbereichs unter Berücksichtigung daraus resultierender Änderungen der Restlaufzeiten erfolgt.

13. Verfahren nach Anspruch 12, wobei der zuzuführende Wärmestrom so bestimmt wird, dass eine Verschiebung eines Wartungszeitpunkts um eine erwünschte Zeitdauer resultiert, wodurch insbesondere eine Verkürzung oder Verlängerung der entsprechenden Restlaufzeit resultiert.

14. Computerprogrammprodukt umfassend Programmteile, welche, wenn in einem Computer geladen, zur Durchführung des Verfahrens nach einem der Ansprüche 1 bis 13 geeignet sind.

15. ORC-Stack mit einer Gesamtanzahl nₜₒₜ von einzeln betreibbaren ORC-Modulen, wobei der ORC-Stack eine Steuereinheit zur Ausführung des Verfahrens nach einem der Ansprüche 1 bis 13 umfasst.

## Claims

1. Method for controlling an ORC stack with a total number nₜₒₜ of individually operable ORC modules, wherein the method is **characterized by** the following steps:
determining the respective running time remaining until the next servicing time for each operable ORC module;
determining a target number nₛₒₗₗ of ORC modules to be operated;
comparing said target number nₛₒₗₗ to an actual number nᵢₛₜ of currently operated ORC modules;
when nₛₒₗₗ > nᵢₛₜ, connecting a number nₛₒₗₗ - nᵢₛₜ of ORC modules that corresponds to the difference between the target number and the actual number, where the ORC modules with the longest remaining running times of ORC modules currently not being operated are connected; and/or
when nₛₒₗₗ < nᵢₛₜ, disconnecting a number nᵢₛₜ - nₛₒₗₗ of ORC modules that corresponds to the difference between the actual number and the target number, where the ORC modules with the shortest remaining running times of ORC modules currently being operated are disconnected; and/or
when nₛₒₗₗ = nᵢₛₜ, connecting the ORC module with the longest remaining running time Δt₁ of ORC modules not currently being operated, and disconnecting the ORC module with the shortest remaining running time Δt₂ of ORC modules currently being operated, if Δt₁ > Δt₂.

2. Method according to claim 1 comprising the further step of:
re-performing the steps of claim 1 after a predetermined update period.

3. Method according to claim1 or 2, where determining the running time remaining until the next servicing comprises determining the shortest running time for each operable ORC module from a plurality of running times remaining until the servicing times for various services for the respective ORC module.

4. Method according to claim 1 or 2, where the respective servicing times for the operable ORC modules are servicing times for similar services.

5. Method according to one of the preceding claims, where determining the remaining running time or the remaining running times is done using predetermined or self-learning functions/algorithms.

6. Method according to one of the preceding claims, further comprising the step of:
determining a variable that determines a heat flow in the ORC stack, in particular the heat flow itself or the mass flow of a heat-conveying fluid;
where determining the target number of ORC modules to be operated is done in dependence of the variable determining the heat flow.

7. Method according to claim 6, comprising the further step of:
re-determining the input heat flow, in particular after a predetermined waiting period after last determining the input heat flow has lapsed, and
if a change of the input heat flow is determined, in particular beyond a tolerance range for the change, re-performing the method of claim 6 including all the steps in the respective dependent claims.

8. Method according to claim 6 or 7, where determining the target number of ORC modules to be operated further comprises determining a respective heat flow to be supplied within an operating range for each ORC module with respect to the heat flow supplied.

9. Method according to claim 8, where the operating range is defined for each ORC module by a heat flow range in an output curve or an efficiency curve indicating the relationship between electric power and electric efficiency in dependence of the heat flow supplied, in particular a heat flow range being defined by a minimum and a maximum heat flow.

10. Method according to claim 9, where the respective heat flow to be supplied is determined for one or more ORC modules to be operated such that the largest possible electrical power or the highest possible electrical efficiency results.

11. Method according to claim 9 or 10, where determining the heat flow to be supplied for each ORC module comprises maximizing overall electrical efficiency of the ORC stack.

12. Method according to one of the claims 8 to 11, where determining the heat flow to be supplied is effected within the operating range while taking into account the changes of the remaining running times resulting therefrom.

13. Method according to claim 12, where the heat flow to be supplied is determined such that a shift of a servicing time by a desired period results, resulting in particular in shortening or lengthening the respective remaining running time.

14. Computer program product comprising program elements which when loaded into a computer are suitable for performing the method according to one of the claims 1 to 13.

15. ORC stack with a total number nₜₒₜ of individually operable ORC modules, where the ORC stack comprises a control unit for performing the method according to one of the claims 1 to 13.

## Revendications

1. Procédé destiné à la régulation d'un groupe-ORC (groupe de modules à cycle organique de Rankine) constitué d'un nombre total nₜₒₜ de modules-ORC susceptibles de fonctionner individuellement, le procédé étant **caractérisé par** les étapes suivantes :
la détermination d'un temps de marche restant respectif jusqu'à une date de maintenance suivante pour chaque module-ORC susceptible de fonctionner ;
la détermination d'un nombre de consigne nₛₒₗₗ de modules-ORC à faire fonctionner ;
la comparaison du nombre de consigne nₛₒₗₗ avec un nombre actuel nᵢₛₜ de modules-ORC fonctionnant actuellement ;
dans le cas où nₛₒₗₗ > nᵢₛₜ, la mise en fonctionnement d'un nombre nₛₒₗₗ - nᵢₛₜ de modules-ORC correspondant à la différence entre le nombre de consigne et le nombre actuel, les modules-ORC que l'on met en fonctionnement étant les modules-ORC actuellement non en fonctionnement et présentant les temps de marche restant les plus longs ; et/ou
dans le cas où nₛₒₗₗ < nᵢₛₜ, la mise à l'arrêt d'un nombre nᵢₛₜ - nₛₒₗₗ de modules-ORC correspondant à la différence entre le nombre actuel et le nombre de consigne, les modules-ORC que l'on met à l'arrêt étant les modules-ORC actuellement en fonctionnement et présentant les temps de marche restant les plus courts ; et/ou
dans le cas où nₛₒₗₗ = nᵢₛₜ, la mise en fonctionnement du module-ORC présentant le temps de marche restant Δt₁ le plus long des modules-ORC actuellement non en fonctionnement, et la mise à l'arrêt du module-ORC présentant le temps de marche restant Δt₂ le plus court des modules-ORC actuellement en fonctionnement, lorsque Δt₁ > Δt².

2. Procédé selon selon la revendication 1, comprenant l'étape supplémentaire suivants :
une nouvelle exécution des étapes selon la revendication 1 après écoulement d'une durée d'actualisation prescrite.

3. Procédé selon la revendication 1 ou la revendication 2, d'après lequel la détermination du temps de marche restant jusqu'à la prochaine maintenance pour chaque module-ORC susceptible de fonctionner, comprend une détermination du temps de marche restant le plus court parmi une pluralité de temps de marche restants jusqu'à des dates de maintenance pour des maintenances les plus diverses pour le module-ORC respectivement considéré.

4. Procédé selon la revendication 1 ou la revendication 2, d'après lequel les dates de maintenance respectives pour les modules-ORC susceptibles de fonctionner, sont des dates de maintenance pour des maintenances de même type.

5. Procédé selon l'une des revendications précédentes, d'après lequel la détermination du temps de marche restant ou des temps de marche restants, s'effectue à l'aide de fonctions/d'algorithmes prédéterminés ou à auto-apprentissage.

6. Procédé selon l'une des revendications précédentes, comprenant en outre l'étape suivants :
la détermination d'une grandeur définissant le flux de chaleur dans le groupe-ORC, notamment le flux de chaleur lui-même ou le débit massique d'un fluide caloporteur ;
procédé d'après lequel la détermination du nombre de consigne de modules-ORC à faire fonctionner est effectuée en fonction de la grandeur définissant le flux de chaleur.

7. Procédé selon la revendication 6, comprenant l'étape supplémentaire suivante :
une nouvelle détermination du flux de chaleur entrant, notamment après écoulement d'un temps d'attente prescrit, après la dernière détermination du flux de chaleur entrant, et
dans le cas où l'on constate une variation du flux de chaleur entrant, notamment au-delà d'une plage de tolérance pour la variation, une nouvelle exécution du procédé selon la revendication 6, y compris toutes les étapes dans les revendications dépendantes respectives.

8. Procédé selon la revendication 6 ou la revendication 7, d'après lequel la détermination du nombre de consigne de modules-ORC à faire fonctionner, comprend, en outre, une détermination d'un flux de chaleur respectif à fournir, à l'intérieur d'une plage de fonctionnement pour chaque module-ORC, concernant le flux de chaleur fourni.

9. Procédé selon la revendication 8, d'après lequel la plage de fonctionnement pour chaque module-ORC est définie par une plage de flux de chaleur dans une courbe caractéristique de puissance ou une courbe caractéristique de rendement, qui indique la relation entre la puissance électrique ou respectivement le rendement électrique en fonction du flux de chaleur fourni, notamment une plage de flux de chaleur, qui est définie par un flux de chaleur minimal et un flux de chaleur maximal.

10. Procédé selon la revendication 9, d'après lequel on détermine pour l'un ou plusieurs des modules-ORC à faire fonctionner, le flux de chaleur à fournir respectivement, de manière telle qu'il en résulte une puissance électrique la plus grande possible ou un rendement électrique le plus grand possible.

11. Procédé selon la revendication 9 ou la revendication 10, d'après lequel la détermination du flux de chaleur à fournir pour chaque module-ORC comprend une maximisation d'un rendement global électrique pour le groupe-ORC.

12. Procédé selon l'une des revendications 8 à 11, d'après lequel la détermination du flux de chaleur à fournir à l'intérieur de la plage de fonctionnement s'effectue en prenant en considération les variations des temps de marche restants, qui en résultent.

13. Procédé selon la revendication 12, d'après lequel le flux de chaleur à fournir est déterminé de façon telle, qu'il en résulte un décalage d'une date de maintenance d'une durée souhaitée, d'où résulte notamment un raccourcissement ou un allongement du temps de marche restant correspondant.

14. Produit de programme d'ordinateur comprenant des parties de programme, qui, lorsqu'elles sont chargées dans un ordinateur, sont adaptées à assurer la mise en oeuvre du procédé selon l'une des revendications 1 à 13.

15. Groupe-ORC comprenant un nombre total nₜₒₜ de modules-ORC susceptibles de fonctionner individuellement, le groupe-ORC comprenant une unité de commande pour exécuter le procédé selon l'une des revendications 1 à 13.
